# EUROPÄISCHE PATENTSCHRIFT

(11) **EP 4 208 502 B1**
(45) Veröffentlichungstag und Bekanntmachung des Hinweises auf die Patenterteilung: **06.03.2024**
(21) Anmeldenummer: 20767779.0
(22) Anmeldetag: 03.09.2020
(51) Int. Cl.: C08G 77/26, C08G 77/388

(54) **OXAMIDFUNKTIONELLE SILOXANE ENTHALTENDE ZUSAMMENSETZUNGEN**
COMPOSITIONS CONTAINING OXAMIDE-FUNCTIONAL SILOXANES
COMPOSITIONS CONTENANT DES SILOXANES À FONCTION OXAMIDE

(43) Veröffentlichungstag der Anmeldung: 12.07.2023
(73) Patentinhaber: Wacker Chemie AG, 81737 München (DE)
(72) Erfinder: SCHÄFER, Oliver, 84489 Burghausen (DE); FUHRMANN, Oliver, 83352 Altenmarkt (DE); JOACHIMBAUER, Michael, 84367 Gumpersdorf (DE)
(74) Vertreter: Mieskes, Klaus Theoderich
(86) Internationale Anmeldenummer: PCT/EP2020/074664
(87) Internationale Veröffentlichungsnummer: WO 2022/048755

(56) Entgegenhaltungen:
- EP-A1- 0 555 893
- US-A1- 2007 148 474

## Beschreibung

Die Erfindung betrifft oxamidfunktionelle Siloxane, Verfahren zu deren Herstellung sowie die Verwendung von oxamidfunktionellen Siloxanen in thermoplastischen Zusammensetzungen.

Thermoplastische Polymere wie Polyethylen oder Polypropylen machen heutzutage den Hauptteil der weltweit produzierten Kunststoffe aus. Im Laufe der letzten Jahre haben Fortschritte in der Herstellungstechnologie dieser Polymere immer leistungsfähigere Materialien ermöglicht. Trotz der inhärent guten Verarbeitungseigenschaften benötigen diese dennoch zur Verarbeitung Prozessadditive, um hier Eigenschaften wie Verarbeitungsgeschwindigkeit, Oberflächengüte, Formtrennverhalten, Rheologiekontrolle und anderes zu optimieren. Dabei werden neben oligomeren Additiven wie Fettsäureamiden, Fettsäureestern, Metallstearaten, oligomeren Kohlenwasserstoff-Wachsen (PE-Wachse) auch höhermolekulare Polymere, wie z.B. Fluorpolymere, eingesetzt. Dabei ist hier die Herausforderung den Einsatz dieser Prozessadditive möglichst zu minimieren, um einen nachteiligen Einfluss auf andere Materialeigenschaften der Polyolefine wie z.B. Steifigkeit oder Kratzfestigkeit zu minimieren bei gleichzeitiger Maximierung des jeweiligen gewünschten Effektes wie z.B. eine Erhöhung der Verarbeitungsgeschwindigkeit. Es wurde daher nach neuen Additiv-Konzepten gesucht, die gegenüber dem Stand der Technik eingesetzten Produkten eine erhöhte Wirksamkeit aufweisen.

WO 2010/077477 A1 beschreibt lineare Polysiloxan-Poly(ox)amid-Copolymere, die in Thermoplasten als Prozess-Additive eingesetzt werden können. Nachteilig an der Verwendung dieser Produkte in diesen Anwendungen ist v.a. das in der Regel hohe Molekulargewicht der verwendeten Copolymere, die zu einer schlechten Verteilung in den Matrix-Thermoplasten und damit zu häufig nicht ausreichenden Prozessverbesserungen führt.

EP-B1 555 893 beschreibt polymere Stabilisatoren auf Basis von Oxamido-Silanen und deren Hydrolysaten in Verbindung mit Kupfer-Pulver, welche Verwendung in Polyolefinen finden können. Einen Einfluss auf die Verarbeitungseigenschaften der Polyolefine wurde hier nicht offenbart.

Überraschenderweise wurde gefunden, dass man durch die Kombination von linearen Siliconen mit relativ niedrigen Molekulargewichten und geringen Anteilen an speziellen aliphatischen Oxamido-Substituenten Verbindungen erhält, welche deutliche Prozess-Verbesserungen beim Einmischen in Thermoplasten zeigen.

Gegenstand der Erfindung sind Zusammensetzungen enthaltend
(A) thermoplastische Polymere und
(B) mindestens eine Organosiliciumverbindung der allgemeinen Formel

   R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
wobei
R gleich oder verschieden sein kann und einen einwertigen, gegebenenfalls substituierten, SiC-gebundenen Kohlenwasserstoffrest bedeutet,
R¹ gleich oder verschieden sein kann und Wasserstoffatom oder einen einwertigen, gegebenenfalls substituierten Kohlenwasserstoffrest bedeutet,
R² eine SiC-gebundene Einheit der allgemeinen Formel

   R³-X-[CO-(CO)ₙ]-X-R⁴- (II)
bedeutet, worin
X gleich oder verschieden sein kann und -O- oder -NR^{x}- ist,
R³ gleich oder verschieden sein kann und monovalente, gegebenenfalls substituierte Kohlenwasserstoffreste mit mindestens 6 Kohlenstoffatomen bedeutet,
R⁴ bivalente, gegebenenfalls substituierte Kohlenwasserstoffreste mit 1 bis 40 Kohlenstoffatomen, wobei einzelne Kohlenstoffatome durch Sauerstoffatome oder -NR^{z}- ersetzt sein können, bedeutet,
R^{x} gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
R^{z} gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**n** 0 oder 1 ist,
**a** 0, 1, 2 oder 3 ist,
**b** 0 oder 1 ist,
**p** eine ganze Zahl von 1 bis 1000 ist,
**q** 0 oder eine ganze Zahl von 1 bis 100 ist und
**r** 0 oder eine ganze Zahl von 1 bis 100,
mit der Maßgabe, dass a+b ≤ 3 ist und mindestens ein Rest R² vorhanden ist.

Beispiele für erfindungsgemäß eingesetzte Polymere (A) sind Polyethylen, Polypropylen, Polyamid, Polyethylenterephthalat, Polybutylenterephthalat, thermoplastische Elastomere auf Basis von vernetztem Kautschuk, Ethylen-Vinylacetat, Polyhydroxybutyrat und/oder Copolymere oder Mischungen hiervon sowie Polystyrol, schlagzähmodifiziertes Polystyrol, Styrol-Acrylnitril-Copolymere, Acrylnitril-Butadien-Styrol-Copolymere, Polyvinylchlorid, Polyvinylidenfluorid, Ethylentetrafluorethylen (ETFE), Polymethylmethacrylat, Polycarbonat, Polyaryletherketon, Polyacrylnitril, Polyetherimid, Polyethylennaphthalat, Polyethersulfon, Polyimid, Polyketon, Polyoxymethylen, Polyphenylensulfid, Polyphenylensulfon, Polysulfon und deren Copolymere oder Mischungen.

Bevorzugte Beispiele für die erfindungsgemäß eingesetzten Komponente (A) sind Polyethylene niederer und hoher Dichte (LDPE, LLDPE, HDPE), Homo- und Copolymere des Propylens mit beispielsweise Ethylen, Buten, Hexen und Octen (PP), Olefincopolymere wie zum Beispiel Ethylen-Vinylacetat-Copolymere (EVA), Olefincopolymere wie zum Beispiel Ethylen-Methylacrylat-Copolymer (EMA) oder Ethylen-Butylacrylat-Copolymere (EBA), Polyvinylchlorid (PVC) oder Polyvinylchlorid-Ethylen-Copolymere sowie Polystyrole (PS, HIPS, EPS), wobei Polyethylen, Polypropylen, Polyamid, Polyethylenterephthalat oder Polybutylenterephthalat besonders bevorzugt sind.

Erfindungsgemäß eingesetzte Polyolefine (A) enthalten ganz besonders bevorzugt Einheiten der allgemeinen Formel

[-CR⁶R⁷-CR⁸R⁹-]ₓ (III)

wobei R⁶, R⁷, R⁸ und R⁹ jeweils unabhängig voneinander Wasserstoffatom, gesättigte, gegebenenfalls substituierte Kohlenwasserstoffreste, ungesättigte Kohlenwasserstoffreste, aromatische Kohlenwasserstoffreste, Vinylesterreste oder Halogenatom bedeuten und x eine Zahl zwischen 100 und 100 000 ist.

Bevorzugt sind die Reste R⁶, R⁷, R⁸ und R⁹ jeweils unabhängig voneinander Wasserstoffatom, gesättigte Kohlenwasserstoffreste, wie Methyl-, Butyl- oder Hexylrest, aromatische Kohlenwasserstoffreste, wie der Phenylrest, oder Halogenatome, wie Chlor oder Fluor, wobei Wasserstoffatom, Methylrest oder Chloratom besonders bevorzugt sind.

Bevorzugte Monomere zur Herstellung von Komponente (A) sind Ethylen, Propylen, Vinylchlorid, Vinylacetat, Styrol, 1-Buten, 1-Hexen, 1-Octen oder Butadien oder deren Mischungen, besonders bevorzugt Ethylen, Propylen oder Vinylchlorid.

Bei den erfindungsgemäß eingesetzten Polymeren (A) handelt es sich insbesondere um Homo- oder Copolymere des Ethylens oder Propylens.

Bei den Polymeren (A) handelt es sich ganz besonders bevorzugt um Polyethylen höherer Dichte (HDPE) oder um Polypropylen.

Bei den erfindungsgemäß eingesetzten thermoplastischen Polymeren (A) ist die Temperatur, bei welcher der Verlustfaktor (G"/G') gemäß DIN EN ISO 6721-2:2008 den Wert von 1 einnimmt, bevorzugt mindestens 40°C, besonders bevorzugt mindestens 100°C.

Die polymere Struktur der thermoplastischen Polymere (A) kann linear aber auch verzweigt sein.

Die Art der eingesetzten organischen Polymere (A) bestimmt im Wesentlichen die Verarbeitungstemperatur der erfindungsgemäßen Mischung.

Der Anteil der thermoplastischen Polymere (A) in der erfindungsgemäßen Zusammensetzung beträgt vorzugsweise 50 Gew.-% bis 99,99 Gew.-%, besonders bevorzugt 90 Gew.-% bis 99,90 Gew.-%, ganz besonders bevorzugt 97,5 bis 99,90 Gew.-%.

Bei der erfindungsgemäß eingesetzten Komponente (A) handelt es sich um handelsübliche Produkte bzw. diese können nach in der Chemie gängigen Verfahren hergestellt werden.

Beispiele für R sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Beispiele für halogenierte Reste R sind Halogenalkylreste wie der 3,3,3-Trifluor-n-propylrest, der 2,2,2,2',2',2'-Hexafluorisopropylrest und der Heptafluorisopropylrest.

Vorzugsweise bedeutet Rest R einen einwertigen, gegebenenfalls mit Fluor- und/oder Chloratomen substituierten Kohlenwasserstoffrest mit 1 bis 20 Kohlenstoffatomen, besonders bevorzugt einen Kohlenwasserstoffrest mit 1 bis 6 Kohlenstoffatomen, insbesondere um den Methyl-, Ethyl-, Vinyl- oder Phenylrest.

Beispiele für Rest R¹ sind die für den Rest R angegebenen Reste sowie über Kohlenstoffatom gebundene Polyalkylenglykolreste.

Bevorzugt handelt es sich bei Rest R¹ um Kohlenwasserstoffreste, besonders bevorzugt um Kohlenwasserstoffreste mit 1 bis 8 Kohlenstoffatomen, insbesondere um den Methyl- oder Ethylrest.

Beispiele für Rest R³ sind die für Rest R angegebenen Beispiele für gegebenenfalls substituierte Kohlenwasserstoffreste mit mindestens 6 Kohlenstoffatomen, wie etwa n-Hexylreste oder Dodecyl-Reste.

Bevorzugt handelt es sich bei Rest R³ um aliphatische Kohlenwasserstoffreste mit mindestens 6 Kohlenstoffatomen, besonders bevorzugt um aliphatische Kohlenwasserstoffreste mit mindestens 10 Kohlenstoffatomen.

Beispiele für Rest R⁴ sind Alkylenreste wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, Heptylenreste, Octylenreste, Nonylenreste, Decylenreste, Dodecylenreste oder Octadecylenreste; Cycloalkylenreste wie Cyclopentylenrest, 1,4-Cyclohexylenrest, Isophoronylenrest oder der 4,4'-Methylen-dicyclohexylenrest; Alkenylenreste wie der Vinylen-, n-Hexenylen-, Cyclohexenylen-, 1-Propenylen-, Allylen-, Butenylen- oder 4-Pentenylenrest; Alkinylenreste wie der Ethinylen- oder Propargylenrest; Arylenreste wie der Phenylen-, Bisphenylen-, Naphthylen-, Anthrylen- oder Phenanthrylenrest; Alkarylenreste wie o-, m-, p-Toluylenreste, Xylylenreste oder Ethylphenylenreste; oder Aralkylenreste wie der Benzylenrest, der 4,4'-Methylendiphenylenrest, der α- oder der β-Phenylethylenrest oder der Ethylen-Propylen-Ether-Rest oder der Ethylen - Propylen-AminRest.

Vorzugsweise handelt es sich bei Rest R⁴ um Alkylenreste, besonders bevorzugt um Methylen- oder n-Propylenreste.

Beispiele für Rest R^{x} und R^{z} sind unabhängig voneinander die für den Rest R angegebenen Reste sowie Wasserstoffatom.

Bevorzugt handelt es sich bei Rest R^{x} um Wasserstoffatom oder Alkylreste, besonders bevorzugt um Wasserstoffatom.

Bevorzugt handelt es sich bei Rest R^{z} um Wasserstoffatom oder Alkylreste, besonders bevorzugt um Wasserstoffatom.

Bevorzugt hat X die Bedeutung von -NR^{x}- mit R^{x} gleich der obengenannten Bedeutung.

Vorzugsweise ist Index n gleich 1.

Beispiele für Rest R² sind H₁₃C₆-NH-CO-CO-NH-C₃H₆-, H₂₅C₇-NH-CO-CO-NH-C₃H₆-, H₁₇C₈-NH-CO-CO-NH-C₃H₆-, H₁₉C₉-NH-CO-CO-NH-C₃H₆-, H₂₁C₁₀-NH-CO-CO-NH-C₃H₆-, H₂₃C₁₁-NH-CO-CO-NH-C₃H₆-, H₂₅C₁₂-NH-CO-CO-NH-C₃H₆-, H₂₇C₁₃-NH-CO-CO-NH-C₃H₆-, H₂₉C₁₄-NH-CO-CO-NH-C₃H₆-, H₃₁C₁₅-NH-CO-CO-NH-C₃H₆-, H₃₃C₁₆-NH-CO-CO-NH-C₃H₆-, H₃₅C₁₇-NH-CO-CO-NH-C₃H₆-, H₃₇C₁₈-NH-CO-CO-NH-C₃H₆-, H₃₉C₁₉-NH-CO-CO-NH-C₃H₆-, H₄₁C₂₀-NH-CO-CO-NH-C₃H₆-, H₁₃C₆-NH-CO-NH-C₃H₆-, H₁₅C₇-NH-CO-NH-C₃H₆-, H₁₇C₈-NH-CO-NH-C₃H₆-, H₁₉C₉-NH-CO-NH-C₃H₆-, H₂₁C₁₀-NH-CO-NH-C₃H₆-, H₂₃C₁₁-NH-CO-NH-C₃H₆-, H₂₅C₁₂-NH-CO-NH-C₃H₆-, H₂₇C₁₃-NH-CO-NH-C₃H₆-, H₂₉C₁₄-NH-CO-NH-C₃H₆-, H₃₁C₁₅-NH-CO-NH-C₃H₆-, H₃₃C₁₆-NH-CO-NH-C₃H₆-, H_{3S}C₁₇-NH-CO-NH-C₃H₆-, H₃₇C₁₈-NH-CO-NH-C₃H₆-, H₃₉C₁₉-NH-CO-NH-C₃H₆-, H₄₁C₂₀-NH-CO-NH-C₃H₆-, H₁₁C₆-NH-CO-CO-NH-C₃H₆-, H₁₃C₇-NH-CO-CO-NH-C₃H₆-, H₁₅C₈-NH-CO-CO-NH-C₃H₆-, H₁₇C₉-NH-CO-CO-NH-C₃H₆-, H₁₉C₁₀-NH-CO-CO-NH-C₃H₆-, H₂₁C₁₁-NH-CO-CO-NH-C₃H₆-, H₂₃C₁₂-NH-CO-CO-NH-C₃H₆-, H₂₅C₁₃-NH-CO-CO-NH-C₃H₆-, H₂₇C₁₄-NH-CO-CO-NH-C₃H₆-, H₂₉C₁₅-NH-CO-CO-NH-C₃H₆-, H₃₁C₁₆-NH-CO-CO-NH-C₃H₆-, H₃₃C₁₇-NH-CO-CO-NH-C₃H₆-, H₃₅C₁₈-NH-CO-CO-NH-C₃H₆-, H₃₇C₁₉-NH-CO-CO-NH-C₃H₆-, H₃₉C₂₀-NH-CO-CO-NH-C₃H₆-, H₁₃C₆-NH-CO-CO-NH-C₂H₄-NH-C₃H₆-, H₁₅C₇-NH-C₂H₄-NH-CO-CO-NH-C₃H₆-, H₁₇C₈-NH-CO-CO-NH-C₂H₄-NH-C₃H₆-, H₁₉C₉-NH-CO-CO-NH-C₂H₄-NH-C₃H₆-, H₂₁C₁₀-NH-CO-CO-NH-C₂H₄-NH-C₃H₆-, H₂₃C₁₁-NH-CO-CO-NH-C₂H₄-NH-C₃H₆-, H₂₅C₁₂-NH-CO-CO-NH-C₂H₄-NH-C₃H₆-, H₂₇C₁₃-NH-CO-CO-NH-C₂H₄-NH-C₃H₆-, H₂₉C₁₄-NH-CO-CO-NH-C₂H₄-NH-C₃H₆-, H₃₁C₁₅-NH-CO-CO-NH-C₂H₄-NH-C₃H₆-, H₃₃C₁₆-NH-CO-CO-NH-C₂H₄-NH-C₃H₆-, H₃₅C₁₇-NH-CO-CO-NH-C₂H₄-NH-C₃H₆-, H₃₇C₁₈-NH-CO-CO-NH-C₂H₄-NH-C₃H₆-, H₃₉C₁₉-NH-CO-CO-NH-C₂H₄-NH-C₃H₆- und H₄₁C₂₀-NH-CO-CO-NH-C₂H₄-NH-C₃H₆-, wobei H₂₁C₁₀-NH-CO-CO-NH-C₃H₆-, H₂₃C₁₁-NH-CO-CO-NH-C₃H₆-, H₂₅C₁₂-NH-CO-CO-NH-C₃H₆-, H₂₇C₁₃-NH-CO-CO-NH-C₃H₆-, H₂₉C₁₄-NH-CO-CO-NH-C₃H₆-, H₃₁C₁₅-NH-CO-CO-NH-C₃H₆-, H₃₃C₁₆-NH-CO-CO-NH-C₃H₆-, H₃₅C₁₇-NH-CO-CO-NH-C₃H₆-, H₃₇C₁₈-NH-CO-CO-NH-C₃H₆-, H₂₁C₁₀-NH-CO-CO-NH-C₂H₄-NH-C₃H₆-, H₂₃C₁₁-NH-CO-CO-NH-C₂H₄-NH-C₃H₆-, H₂₅C₁₂-NH-CO-CO-NH-C₂H₄-NH-C₃H₆-, H₂₇C₁₃-NH-CO-CO-NH-C₂H₄-NH-C₃H₆-, H₂₉C₁₄-NH-CO-CO-NH-C₂H₄-NH-C₃H₆-, H₃₁C₁₅-NH-CO-CO-NH-C₂H₄-NH-C₃H₆-, H₃₃C₁₆-NH-CO-CO-NH-C₂H₄-NH-C₃H₆-, H₃₅C₁₇-NH-CO-CO-NH-C₂H₄-NH-C₃H₆-, H₃₇C₁₈-NH-CO-CO-NH-C₂H₄-NH-C₃H₆- oder deren Mischungen bevorzugt und
H₂₅C₁₂-NH-CO-CO-NH-C₃H₆-, H₂₉C₁₄-NH-CO-CO-NH-C₃H₆-, H₃₃C₁₆-NH-CO-CO-NH-C₃H₆-, H₂₅C₁₂-NH-CO-CO-NH-C₂H₄-NH-C₃H₆-, H₂₉C₁₄-NH-CO-CO-NH-C₂H₄-NH-C₃H₆- oder H₃₃C₁₆-NH-CO-CO-NH-C₂H₄-NH-C₃H₆- besonders bevorzugt sind.

Vorzugsweise ist a 0 oder 1, besonders bevorzugt 0.

Vorzugsweise ist b 0 oder 1, besonders bevorzugt 1.

Bevorzugt ist p eine ganze Zahl von 10 bis 500, besonders bevorzugt eine ganze Zahl von 30 bis 300.

Bevorzugt ist q 0 oder eine ganze Zahl von 1 bis 20, besonders bevorzugt 0 oder eine ganze Zahl von 1 bis 5.

Bevorzugt ist r 0 oder eine ganze Zahl von 1 bis 10, besonders bevorzugt 0 oder eine ganze Zahl von 1 bis 5, insbesondere 0.

Die erfindungsgemäß eingesetzten Organosiliciumverbindungen der Formel (I) haben bevorzugt ein zahlenmittleres Molekulargewicht Mn von 1000 g/mol bis 35 000 g/mol und besonders bevorzugt ein zahlenmittleres Molekulargewicht Mn von 3000 g/mol bis 20 000 g/mol.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bevorzugt weisen die Organosiliciumverbindungen der Formel (I) einen Schmelzpunkt von unter 200°C auf, besonders bevorzugt von unter 100°C, ganz besonders bevorzugt von unter 75°C, jeweils bei 1000 hPa.

Der Siliciumgehalt der Organosiliciumverbindungen der allgemeinen Formel (I) ist bevorzugt 25 bis 37,5 Gew.-%, besonders bevorzugt 30 bis 37 Gew.-%.

Bevorzugt handelt es sich bei den erfindungsgemäß eingesetzten Organosiliciumverbindungen der Formel (I) um
R₂R²Si[OSiR₂]ₚ[OSiRR²]_{q}OSiR₂R² mit
R = Methyl, R² = H₂₅C₁₂-NH-[CO-CO]-NH-(CH₂)₃-, p = 150, q = 0,
R = Methyl, R² = H₂₅C₁₂-NH-[CO-CO]-NH-(CH₂)₃-, p = 80, q = 0,
R = Methyl, R² = H₂₅C₁₂-NH-[CO-CO]-NH-(CH₂)₃-, p = 250, q = 0,
R = Methyl, R² = H₃₃C₁₆-NH-[CO-CO]-NH-(CH₂)₃-, p = 150, q = 0,
R = Methyl, R² = H₃₃C₁₆-NH-[CO-CO]-NH-(CH₂)₃-, p = 80, q = 0,
R = Methyl, R² = H₃₃C₁₆-NH-[CO-CO]-NH-(CH₂)₃-, p = 250, q = 0,
R = Methyl, R² = H₂₅C₁₂-NH-CO-NH-(CH₂)₃-, p = 150, q = 0,
R = Methyl, R² = H₂₅C₁₂-NH-CO-NH-(CH₂)₃-, p = 80, q = 0,
R = Methyl, R² = H₂₅C₁₂-NH-CO-NH-(CH₂)₃-, p = 250, q = 0,
R = Methyl, R² = H₃₃C₁₆-NH-CO-NH-(CH₂)₃-, p = 150, q = 0,
R = Methyl, R² = H₃₃C₁₆-NH-CO-NH-(CH₂)₃-, p = 80, q = 0,
R = Methyl, R² = H₃₃C₁₆-NH-CO-NH-(CH₂)₃-, p = 250, q = 0,
R = Methyl, R² = H₂₅C₁₂-NH-[CO-CO]-NH-(CH₂)₃-, p = 150, q = 2,
R = Methyl, R² = H₂₅C₁₂-NH-[CO-CO]-NH-(CH₂)₃-, p = 80, q = 1,
R = Methyl, R² = H₂₅C₁₂-NH-[CO-CO]-NH-(CH₂)₃-, p = 250, q = 3,
R = Methyl, R² = H₂₅C₁₂-NH-[CO-CO]-NH-(CH₂)₂-NH-(CH₂)₃-, p = 150, q = 0,
R = Methyl, R² = H₂₅C₁₂-NH-[CO-CO]-NH-(CH₂)₂-NH-(CH₂)₃-, p = 80, q = 0,
R = Methyl, R² = H₂₅C₁₂-NH-[CO-CO]-NH-(CH₂)₂-NH-(CH₂)₃-, p = 250, q = 0,
R = Methyl, R² = H₂₅C₁₂-NH-[CO-CO]-NH-(CH₂)₂-NH-(CH₂)₃-, p = 250, q = 3,
oder um Organosiliciumverbindungen der Formel (I)
R₃Si[OSiR₂]ₚ[OSiRR²]_{q}OSiR₃ mit
R = Methyl, R² = H₂₅C₁₂-NH-[CO-CO]-NH-(CH₂)₃-, p = 150, q = 2,
R = Methyl, R² = H₂₅C₁₂-NH-[CO-CO]-NH-(CH₂)₃-, p = 80, q = 1,
R = Methyl, R² = H₂₅C₁₂-NH-[CO-CO]-NH-(CH₂)₃-, p = 250, q = 4,
R = Methyl, R² = H₂₅C₁₂-NH-CO-NH-(CH₂)₃-, p = 150, q = 2,
R = Methyl, R² = H₂₅C₁₂-NH-CO-NH-(CH₂)₃-, p = 80, q = 1,
R = Methyl, R² = H₂₅C₁₂-NH-CO-NH-(CH₂)₃-, p = 250, q = 4,
R = Methyl, R² = H₂₅C₁₂-NH-[CO-CO]-NH-(CH₂)₂-NH-(CH₂)₃-, p = 150, q = 2,
R = Methyl, R² = H₂₅C₁₂-NH-[CO-CO]-NH-(CH₂)₂-NH-(CH₂)₃-, p = 80, q = 1,
R = Methyl, R² = H₂₅C₁₂-NH-[CO-CO]-NH-(CH₂)₂-NH-(CH₂)₃-, p = 250, q = 4,
R = Methyl, R² = H₃₃C₁₆-NH-[CO-CO]-NH-(CH₂)₃-, p = 150, q = 2,
R = Methyl, R² = H₃₃C₁₆-NH-[CO-CO]-NH-(CH₂)₃-, p = 80, q = 1,
R = Methyl, R² = H₃₃C₁₆-NH-[CO-CO]-NH-(CH₂)₃-, p = 250, q = 3,
R = Methyl, R² = H₃₃C₁₆-NH-[CO-CO]-NH-(CH₂)₂-NH-(CH₂)₃-, p = 150, q = 2,
R = Methyl, R² = H₃₃C₁₆-NH-[CO-CO]-NH-(CH₂)₂-NH-(CH₂)₃-, p = 80, q = 1,
R = Methyl, R² = H₃₃C₁₆-NH-[CO-CO]-NH-(CH₂)₂-NH-(CH₂)₃-, p = 250, q = 4,
besonders bevorzugt um R₂R²Si[OSiR₂]ₚ[OSiRR²]_{q}OSiR₂R² mit
R = Methyl, R² = H₂₅C₁₂-NH-[CO-CO]-NH-(CH₂)₃-, p = 150, q = 0,
R = Methyl, R² = H₃₃C₁₆-NH-[CO-CO]-NH- (CH₂)₃-, p = 150, q = 0,
R = Methyl, R² = H₂₅C₁₂-NH-[CO-CO]-NH-(CH₂)₃-, p = 150, q = 2,
R = Methyl, R² = H₂₅C₁₂-NH- [CO-CO]-NH-(CH₂)₂-NH-(CH₂)₃-, p = 150, q = 0,
oder um Organosiliciumverbindungen der Formel (I)
R₃Si[OSiR₂]ₚ[OSiRR²]_{q}OSiR₃ mit
R = Methyl, R² = H₂₅C₁₂-NH-[CO-CO]-NH-(CH₂)₃-, p = 150, q = 2,
R = Methyl, R² = H₂₅C₁₂-NH-[CO-CO]-NH-(CH₂)₃-, p = 250, q = 3,
R = Methyl, R² = H₃₃C₁₆-NH-[CO-CO]-NH-(CH₂)₃-, p = 150, q = 2,
R = Methyl, R² = H₃₃C₁₆-NH-[CO-CO] -NH- (CH₂)₃-, p = 250, q = 4,
R = Methyl, R² = H₃₃C₁₆-NH-[CO-CO]-NH-(CH₂)₂-NH-(CH₂)₃-, p = 150, q = 2.

Ein weiterer Gegenstand der vorliegenden Erfindung sind Organosiliciumverbindungen der allgemeinen Formel

R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),

wobei
**R** gleich oder verschieden sein kann und einen einwertigen, gegebenenfalls substituierten, SiC-gebundenen Kohlenwasserstoffrest bedeutet,
**R¹** gleich oder verschieden sein kann und Wasserstoffatom oder einen einwertigen, gegebenenfalls substituierten Kohlenwasserstoffrest bedeutet,
**R²** eine SiC-gebundene Einheit der allgemeinen Formel

   R³-X-[CO-CO]-X-R⁴- (II)
bedeutet, worin
**X** gleich oder verschieden sein kann und -NR^{x}- ist,
**R³** gleich oder verschieden sein kann und monovalente, gegebenenfalls substituierte Kohlenwasserstoffreste mit mindestens 6 Kohlenstoffatomen bedeutet,
**R⁴** bivalente, gegebenenfalls substituierte Kohlenwasserstoffreste mit 1 bis 40 Kohlenstoffatomen, wobei einzelne Kohlenstoffatome durch Sauerstoffatome oder -NR^{z}- ersetzt sein können, bedeutet,
**R^{x}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**R^{z}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**a** 0, 1 oder 2 ist,
**b** 0 oder 1 ist,
**p** eine ganze Zahl von 1 bis 1000 ist,
**q** 0 oder eine ganze Zahl von 1 bis 100 ist und
**r** 0 oder eine ganze Zahl von 1 bis 100,
mit der Maßgabe, dass a+b ≤ 3 ist und mindestens ein Rest R² vorhanden ist.

Bei den erfindungsgemäß eingesetzten Organosiliciumverbindungen (B) bzw. erfindungsgemäßen Organosiliciumverbindungen der Formel (I) ist p bevorzugt größer oder gleich b+r+q, wobei b+r+q ≥ 1 ist.

Besonders bevorzugt ist bei den erfindungsgemäß eingesetzten Organosiliciumverbindungen (B) bzw. erfindungsgemäßen Organosiliciumverbindungen der Formel (I) p > 5 x (b+q+r), insbesondere p > 20 x (b+q+r), wobei b+r+q ≥ 1 ist.

Ein weiterer Gegenstand der vorliegenden Erfindung ist ein Verfahren zur Herstellung von oxamidfunktionellen Siloxanen durch Umsetzung von Organosiliciumverbindungen der allgemeinen Formel

R_{3-a-b}(OR¹)ₐR¹¹_{b}Si[OSiR₂]ₚ[OSiRR¹¹]_{q}[OSiR¹¹₂]ᵣOSiR_{3-a-b}(OR¹)ₐR¹¹_{b} (I'),

wobei R, R¹, a, b, p, q und r die oben dafür angegebenen Bedeutungen haben und
R¹¹ eine SiC-gebundene Einheit der allgemeinen Formel

   R¹⁰-O-[CO-CO]-NR^{x}-R⁴- (II')
bedeutet, worin
R⁴, R^{x} und n die oben dafür angegebenen Bedeutungen haben und
R¹⁰ Wasserstoffatom oder einen einwertigen, gegebenenfalls substituierten Kohlenwasserstoffrest darstellt, der durch Heteroatome unterbrochen sein kann,
mit der Maßgabe, dass a+b ≤ 3 ist und mindestens ein Rest R¹¹ vorhanden ist,
mit organischen Verbindungen der allgemeinen Formel

   R³-NR^{x}-H (IV),
worin R³ und R^{x} eine oben dafür angegebene Bedeutung haben.

Beispiele für Rest R¹⁰ sind die für Rest R angegebenen Beispiele, wobei Methyl-, Ethyl- oder Propylreste bevorzugt und Methyl- oder Ethylreste besonders bevorzugt sind.

Bei den erfindungsgemäß eingesetzten Organosiliciumverbindungen der Formel (I') handelt es sich um handelsübliche Produkte bzw. können diese nach in der Chemie gängigen Verfahren hergestellt werden.

Bevorzugt handelt es sich bei den Verbindungen der Formel (IV) um primäre Amine, besonders bevorzugt um primäre aliphatische Amine, insbesondere um primäre aliphatische Amine mit einem Molekulargewicht von > 115 g/mol und ganz besonders bevorzugt um Dodecylamin, Tetradecylamin, Hexadecylamin oder Octadecylamin.

Bei den erfindungsgemäß eingesetzten Verbindungen der Formel (IV) handelt es sich um handelsübliche Produkte bzw. können diese nach in der Chemie gängigen Verfahren hergestellt werden.

Bei dem erfindungsgemäßen Verfahren werden Verbindungen der Formel (IV) in Mengen von bevorzugt 1 bis 15 Gew.-%, besonders bevorzugt von 2 bis 10 Gew.-%, insbesondere von 3 bis 8 Gew.-%, jeweils bezogen auf das Gewicht der Organosiliciumverbindungen der Formel (I`) eingesetzt.

Bei dem erfindungsgemäßen Verfahren können die Organosiliciumverbindungen der Formel (I`) und die Verbindungen der Formel (IV) sowie gegebenenfalls weitere Komponenten auf beliebige und bisher bekannte Art vermischt werden. Dabei werden bevorzugt Organosiliciumverbindungen der Formel (I`) in einem Reaktor vorgelegt und die organischen Verbindungen der Formel (IV) zudosiert. Die erfindungsgemäße Dosierung kann entweder diskontinuierlich oder kontinuierlich erfolgen. Nach oder während der Reaktion zwischen den Organosiliciumverbindungen der Formel (I') und den organischen Verbindungen der Formel (IV) können die entstehenden Spaltprodukte entweder im Produkt belassen werden oder destillativ abgetrennt werden. Die destillative Abtrennung kann dabei entweder bei Normaldruck oder bevorzugt bei vermindertem Druck erfolgen. Die bevorzugten Temperaturen bei der Reaktion bzw. Abtrennung der Kondensationsprodukte sind dabei bevorzugt zwischen 0°C und 150°C, besonders bevorzugt zwischen 20°C und 100°C. Der bevorzugte Druckbereich ist dabei bevorzugt zwischen 10 hPa und 1500 hPa und besonders bevorzugt zwischen 20 hPa und 1013 hPa.

Bevorzugt wird die erfindungsgemäße Reaktion unter Verwendung von Schutzgas, bevorzugt Stickstoff oder Argon, durchgeführt.

Die Verhältnisse zwischen Organosiliciumverbindungen der Formel (I') und organischen Verbindungen der Formel (IV) werden bevorzugt so gewählt, dass die organischen Verbindungen der Formel (IV) in einem molaren Verhältnis von 0,5 Äquivalenten zu 1,5 Äquivalenten, besonders bevorzugt von 0,9 Äquivalenten zu 1,1 Äquivalenten, insbesondere von 0,98 zu 1,02 Äquivalenten, jeweils bezogen auf die reaktive Gruppe der Formel (II`), eingesetzt wird.

Die Reaktion zwischen Amingruppe der organischen Verbindungen der Formel (IV) und der reaktiven Gruppe (II`) in den erfindungsgemäß eingesetzten Organosiliciumverbindungen der Formel (I') ist in der Regel nahezu quantitativ.

Das erfindungsgemäße Reaktionsgemisch wird, bevorzugt nach zumindest teilweiser Entfernung der Spaltprodukte bei bevorzugt Temperaturen oberhalb des Schmelzpunktes der Organosiliciumverbindungen der Formel (I), aus dem Reaktor entfernt.

Komponente (B) wird in Mengen von bevorzugt 0,05 bis 10 Gewichtsteilen, besonders bevorzugt 0,1 bis 5 Gewichtsteilen, insbesondere 0,25 bis 3 Gewichtsteilen, jeweils bezogen auf 100 Gewichtsteile Komponente (A), eingesetzt.

Zusätzlich zu den Komponenten (A) und (B) können die erfindungsgemäßen Zusammensetzungen weitere Stoffe enthalten, bevorzugt ausgewählt aus anorganischen Füllstoffen (C), organischen oder anorganischen Fasern (D), Flammschutzmitteln (E), Bioziden (F), Pigmenten (G), UV-Absorbern (H) und HALS-Stabilisatoren (I) .

Beispiele für gegebenenfalls eingesetzte anorganische Füllstoffe (C) sind Kreide (Calciumcarbonat), Kaolin, Silikate, Siliziumdioxid oder Talkum.

Beispiele für erfindungsgemäß gegebenenfalls eingesetzte Fasern (D) sind Glasfasern, Basaltfasern oder Wollastonit, wobei Glasfasern bevorzugt sind, oder organische Fasern, wie Aramid fasern, Holzfasern oder Cellulosefasern.

Falls anorganische Fasern (D) eingesetzt werden, handelt es sich um Mengen von bevorzugt 1 bis 50 Gew.-%, besonders bevorzugt 5 bis 35 Gew.-%, jeweils bezogen auf das Gesamtgewicht der Zusammensetzung. Die erfindungsgemäßen Zusammensetzungen enthalten bevorzugt keine anorganischen Fasern (D).

Falls organische Fasern (D) eingesetzt werden, handelt es sich um Mengen von bevorzugt 20 bis 80 Gew.-%, besonders bevorzugt 35 bis 65 Gew.-%, jeweils bezogen auf das Gesamtgewicht der Zusammensetzung. Die erfindungsgemäßen Zusammensetzungen enthalten bevorzugt keine organischen Fasern (D).

Beispiele für erfindungsgemäß gegebenenfalls eingesetzte Flammschutzmittel (E) sind organische Flammschutzmittel auf Basis halogenierter organischer Verbindungen oder anorganische Flammschutzmittel z.B. Aluminiumhydroxid (ATH) oder Magnesiumhydroxid.

Falls Flammschutzmittel (E) eingesetzt werden, sind anorganische Flammschutzmittel wie ATH bevorzugt.

Beispiele für erfindungsgemäß gegebenenfalls eingesetzte Biozide (F) sind anorganische Fungizide, wie Borate wie z.B. Zinkborat, oder organische Fungizide wie z.B. Thiabendazol.

Beispiele für die erfindungsgemäß gegebenenfalls eingesetzten Pigmente (G) sind organische Pigmente oder anorganische Pigmente wie z.B. Eisenoxide oder Titandioxid.

Falls Pigmente (G) eingesetzt werden, handelt es sich um Mengen von bevorzugt 0,2 bis 7 Gew.-%, besonders bevorzugt 0,5 bis 3 Gew.-%, jeweils bezogen auf das Gesamtgewicht der Zusammensetzung.

Beispiele für erfindungsgemäß gegebenenfalls eingesetzte UV-Absorber (H) sind Benzophenone, Benzotriazole oder Triazine.

Falls UV-Absorber (H) eingesetzt werden, sind Benzotriazole oder Triazine bevorzugt.

Beispiele für erfindungsgemäß gegebenenfalls eingesetzte HALS-Stabilisatoren (I) sind z.B. Piperidin oder Piperidyl-Derivate und sind u.a. unter dem Markennamen Tinuvin bei der BASF SE, D-Ludwigshafen erhältlich.

Bevorzugt handelt es sich bei den erfindungsgemäßen Zusammensetzungen um solche enthaltend
(A) HDPE,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₂₅C₁₂-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) LDPE,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₂₅C₁₂-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) Polypropylen,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₂₅C₁₂-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) Polyvinylchlorid,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₂₅C₁₂-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) HDPE,
(B) Organosiliciumverbindungen der Formel R₃Si[OSiR₂]ₚ[OSiRR²]_{q}O-SiR₃ mit R, R², p und q gleich der obengenannten Bedeutungen, bevorzugt R = Methylrest, R² = H₂₅C₁₂-NH-[CO-CO]-NH-(CH₂)₃-, p = 150 und q = 2,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) LDPE,
(B) Organosiliciumverbindungen der Formel R₃Si[OSiR₂]p[O-SiRR²]_{q}OSiR₃ mit R, R², p und q gleich der obengenannten Bedeutungen, bevorzugt R = Methylrest, R² = H₂₅C₁₂-NH-[CO-CO]-NH-(CH₂)₃-, p = 150 und q = 2,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) Polypropylen,
(B) Organosiliciumverbindungen der Formel R₃Si[OSiR₂]p[O-SiRR²]_{q}OSiR₃ mit R, R², p und q gleich der obengenannten Bedeutungen, bevorzugt R = Methylrest, R² = H₂₅C₁₂-NH-[CO-CO]-NH-(CH₂)₃-, p = 150 und q = 2,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) HDPE,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₃₃C₁₆-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) LDPE,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₃₃C₁₆-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Des Weiteren bevorzugt handelt es sich bei den erfindungsgemä-βen Zusammensetzungen um solche enthaltend
(A) Polypropylen,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₃₃C₁₆-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Besonders bevorzugt handelt es sich bei den erfindungsgemäßen Zusammensetzungen um solche enthaltend
(A) HDPE,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₂₅C₁₂-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

In einer weiteren besonders bevorzugten Ausführungsform handelt es sich bei den erfindungsgemäßen Zusammensetzungen um solche enthaltend
(A) Polypropylen,
(B) Organosiliciumverbindungen der Formel R₂R²Si[OSiR₂]ₚ[O-SiRR²]_{q}OSiR₂R² mit R, R², p und q gleich der obengenannten Bedeutungen, bevorzugt R = Methylrest, R² = H₂₅C₁₂-NH-[CO-CO]-NH-(CH₂)₃-, p = 150 und q = 0,
gegebenenfalls (C) anorganische Füllstoffe,
gegebenenfalls (D) organische oder anorganische Fasern,
gegebenenfalls (E) Flammschutzmittel,
gegebenenfalls (F) Biozide,
gegebenenfalls (G) Pigmente,
gegebenenfalls (H) UV-Absorber und
gegebenenfalls (I) HALS-Stabilisatoren.

Die erfindungsgemäßen Zusammensetzungen enthalten über die Komponenten (A) bis (I) hinausgehend bevorzugt keine weiteren Bestandteile.

Bei den einzelnen Bestandteilen der erfindungsgemäßen Zusammensetzungen kann es sich jeweils um eine Art eines solchen Bestandteils wie auch um ein Gemisch aus mindestens zwei verschiedenen Arten derartiger Bestandteile handeln.

Die erfindungsgemäßen Zusammensetzungen können nach beliebigen und bisher bekannten Verfahren hergestellt werden, wie z.B. Vermischen der Komponenten in beliebiger Reihenfolge. Hierzu können Mischer oder Kneter oder Extruder nach dem Stand der Technik verwendet werden.

Ein weiterer Gegenstand der vorliegenden Erfindung ist ein Verfahren zur Herstellung der erfindungsgemäßen Zusammensetzungen durch Vermischen der Komponenten (A) und (B) sowie gegebenenfalls weiteren Komponenten, bevorzugt ausgewählt aus den Komponenten (C) bis (I), in beliebiger Reihenfolge.

Das erfindungsgemäße Verfahren kann in Anwesenheit oder Abwesenheit von Lösungsmittel stattfinden, wobei die lösungsmittelfreie Herstellung bevorzugt ist.

Das erfindungsgemäße Verfahren kann kontinuierlich, diskontinuierlich oder semikontinuierlich durchgeführt werden, bevorzugt jedoch kontinuierlich.

Das erfindungsgemäße Verfahren wird bevorzugt in kontinuierlich arbeitenden Knetern oder Mischern oder Extrudern durchgeführt, wobei die erfindungsgemäß zu mischenden Einzelkomponenten entweder in Reinform oder als Vormischung jeweils gravimetrisch oder volumetrisch dem Mischaggregat kontinuierlich zugeführt werden. Komponenten, die in der Gesamtmischung mit einem Anteil von unter 1 Gew.-% enthalten sind, werden bevorzugt als Vormischung in einer der Komponenten mit einem größeren Anteil zugeführt.

Die Temperaturen, bei denen das erfindungsgemäße Verfahren durchgeführt wird, hängen in erster Linie von den eingesetzten Komponenten ab und sind dem Fachmann bekannt, mit der Maßgabe, dass sie unterhalb der spezifischen Zersetzungstemperaturen der einzelnen eingesetzten Komponenten liegen. Bevorzugt wird das erfindungsgemäße Verfahren bei Temperaturen unterhalb von 250°C, besonders bevorzugt im Bereich von 150 bis 220°C, durchgeführt.

Das erfindungsgemäße Verfahren wird bevorzugt beim Druck der umgebenden Atmosphäre, also zwischen 900 und 1100 hPa, durchgeführt. Es können aber auch höhere Drücke angewendet werden, die insbesondere vom verwendeten Mischaggregat abhängen. So ist der Druck in unterschiedlichen Bereichen der verwendeten Kneter, Mischer oder Extruder beispielsweise deutlich größer als 1000 hPa.

In einer bevorzugten Ausführungsform des erfindungsgemäßen Verfahrens wird Komponente (B) in einem sogenannten Masterbatch als Vormischung mit einem Teil der Komponente (A) sowie gegebenenfalls einer oder mehreren der Komponenten (C) bis (I) eingesetzt. Vorzugsweise wird diese Vormischung durch Vermischen der Komponenten (A) und (B) sowie gegebenenfalls einer oder mehreren der Komponenten (C) bis (I) bei Temperaturen zwischen 100°C und 230°C hergestellt, wobei das Vermischen kontinuierlich, diskontinuierlich oder semikontinuierlich durchgeführt werden kann. Für den Mischvorgang können Mischer, Kneter oder Extruder nach dem Stand der Technik verwendet werden.

Bevorzugt wird das Vermischen der Komponenten (A) und (B) kontinuierlich in einem Extruder oder Kneter nach dem Stand der Technik durchgeführt. Bevorzugt ist in dieser Vormischung das Copolymer (B) in einer Menge zwischen 5 und 40 Gew.-%, besonders bevorzugt zwischen 10 und 30 Gew.-%, insbesondere bevorzugt zwischen 10 und 25 Gew.-%, jeweils bezogen auf das Gewicht der Vormischung, enthalten.

Die erfindungsgemäß hergestellte Vormischung liegt dabei bevorzugt in Granulatform oder in Pulverform vor, bevorzugt jedoch in Granulatform. Durch mechanisches Vermahlen kann das Granulat auch zu einem Pulver verarbeitet werden bzw. durch eine entsprechende Granulierungsanlage auch als Mikrogranulat erhalten werden.

Bei dem erfindungsgemäßen Verfahren wird die so erhaltene Vormischung dann mit den restlichen Teilen der Komponente (A) und gegebenenfalls einer oder mehreren der Komponenten (C) bis (I) bevorzugt kontinuierlich in einen beheizbaren Mischer gefördert. Dabei können die Komponenten separat zum Mischer zugegeben werden oder zusammen zugegeben werden.

Das Mischen bzw. Homogenisieren der Einzelkomponenten findet dann bevorzugt bei Temperaturen von 150 bis 240°C, besonders bevorzugt bei 180 bis 230°C statt.

Nach dem Mischprozess der Einzelkomponenten wird bevorzugt die erfindungsgemäße Zusammensetzung dann als heiße, hochviskose Schmelze über eine Düse aus dem Reaktor ausgetragen. Dabei wird in einem bevorzugten Verfahren das Material nach dem Austritt mittels eines Kühlmediums abgekühlt und anschließend zerkleinert bzw. granuliert. Hierbei können das Abkühlen des Materials und das Granulieren simultan durch eine Unterwassergranulierung erfolgen oder nacheinander. Als bevorzugte Kühlmedien werden entweder Wasser oder Luft verwendet. Bevorzugte Verfahren zur Granulierung sind dabei Unterwassergranulierung, Granulierung mittels Luftabschlag bzw. Stranggranulierung. Die erhaltenen Granulate haben ein Gewicht von bevorzugt weniger als 0,5 g, besonders bevorzugt weniger als 0,25 g, insbesondere weniger als 0,125 g. Bevorzugt sind die erfindungsgemäß erhaltene Granulate zylinderförmig oder kugelförmig.

Die so erhaltenen Granulate können in einem nachfolgenden Schritt mittels einer weiteren thermoplastischen Verarbeitung zu einem Formkörper, bevorzugt einem Profil, extrudiert werden Dabei werden nach einer bevorzugten Verfahrensweise die erfindungsgemäßen Zusammensetzungen in Form eines Granulates kontinuierlich in einen Kneter oder Extruder nach dem Stand der Technik gefördert, in diesem Kneter oder Extruder durch Temperatureinwirkung erwärmt und plastifiziert und anschließend durch eine Düse gepresst, die die gewünschte Profilform vorgibt. So können hier je nach Auslegung der Düse entweder Vollprofile aber auch Hohlprofile gefertigt werden.

Ein weiterer Gegenstand der Erfindung sind Formkörper hergestellt durch Extrusion der erfindungsgemäßen oder erfindungsgemäß hergestellten Zusammensetzungen durch die Verarbeitung mittels Spritzgussprozess.

In einer bevorzugten Ausführung wird die erfindungsgemäße Zusammensetzung direkt über eine passende Düse kontinuierlich als Profil oder Folie extrudiert, welches dann ebenfalls nach Abkühlen abgelängt bzw. zugeschnitten werden kann.

Bei der Herstellung der erfindungsgemäßen Zusammensetzung können Mischer oder Kneter oder Extruder nach dem Stand der Technik verwendet werden.

Die erfindungsgemäß erhaltenen Zusammensetzungen sind bevorzugt thermoplastisch, d.h. die Temperatur, bei welcher der Verlustfaktor (G"/G') gemäß DIN EN ISO 6721-2:2008 den Wert von 1 einnimmt, beträgt bevorzugt mindestens 40°C, besonders bevorzugt mindestens 100°C.

Die erfindungsgemäßen Mischungen können überall dort verwendet werden, wo auch bisher Mischungen mit thermoplastischen Polymeren eingesetzt wurden.

Die erfindungsgemäßen Mischungen können zur Herstellung von Halbzeugen wie Folien, Rohren, Kabelumhüllungen, Platten, Profilen oder Fasern oder zur Herstellung 3-dimensionaler Formteile verwendet werden.

Die erfindungsgemäßen Zusammensetzungen haben den Vorteil, dass sie einfach in der Herstellung sind.

Die erfindungsgemäßen Zusammensetzungen haben den Vorteil, dass man bei der kontinuierlichen Verarbeitung dieser Zusammensetzungen zu Halbzeugen Produkte erhält, die eine bessere Oberflächengüte aufweisen, die eine verbesserte Abriebbeständigkeit aufweisen können, die geringere Oberflächenenergien haben und die verbesserte mechanische Kennwerte zeigen. Darüber hinaus können diese Halbzeuge mit einer höheren Geschwindigkeit extrudiert werden. Die Herstellung 3-dimensionaler Formkörper aus den erfindungsgemäßen Zusammensetzungen hat den Vorteil, dass diese eine erhöhte Abriebfestigkeit aufweisen, der Verarbeitungsprozess beschleunigt ablaufen kann durch die erhöhte Fließfähigkeit des Materiales, dass die Anhaftung an die Form reduziert werden kann und somit Entformungskräfte und Entformungszeiten verringert werden können, das dünnwandigere Teile mit weniger Gewicht hergestellt werden können und dass die Oberflächengüte der aus den erfindungsgemäßen Mischungen hergestellten Formkörper deutlich besser ist und man während des Spritzgussprozesses auftretende rheologisch Effekte wie z.B. Tiger-Stripes verhindert werden können.

Die erfindungsgemäßen Zusammensetzungen haben den Vorteil, dass man in diesen nun leichtfließende Polymere mit schlechteren mechanischen Kennwerten durch schwerer fließende Polymere mit besseren mechanischen Kennwerten ersetzen kann, wodurch die mechanischen Kennwerte der Zusammensetzungen insgesamt verbessert werden können.

Bei der Verwendung von Füllstoffen in den erfindungsgemäßen Zusammensetzungen hat man den Vorteil, dass der Gehalt an Füllstoffen zur Verbesserung des Eigenschaftsprofiles leicht erhöht werden kann, ohne die Verarbeitungsfähigkeit zu beeinflussen. Schädigungen an anisotropen Füllstoffen wie z.B. Fasern können mittels der erfindungsgemäßen Mischungen vermieden werden, was zu einem verbesserten Eigenschaftsprofil führt.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei einer Temperatur von 20°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Edukte:

**PE 1:** Polyethylen hoher Dichte, käuflich erhältlich unter der Bezeichnung "HDPE, Purell GA 7760" bei der Fa. LyondellBasell, D-Frankfurt;
**PE 2:** Polyethylen hoher Dichte, käuflich erhältlich unter der Bezeichnung "HDPE, BB2581" bei der Fa. Borealis Polyolefine, A-Linz;
**PP 1:** Polypropylen Hompolymer, käuflich erhältlich unter der Bezeichnung "HC205 TF" bei der Fa. Borealis Polyolefine, A-Linz;
**Amin 1:** Dodecylamin, erhältlich unter der Bezeichnung "Armeen 12D" bei der Fa. Nouryon, Stenungsund, Schweden;
**Amin 2:** Cocoamine, Mischung aliphatischer Amine mit C8-C18, erhältlich unter der Bezeichnung "Armee CD" bei der Fa. Nouryon, Stenungsund, Schweden;
**Amin 3:** 1-Aminooctadecane, käuflich erhältlich unter der Bezeichnung Octadecylamine bei der Firma SigmaAldrich;
**Amid 1:** cis-13-Docosenoamide, käuflich erhältlich unter der Bezeichnung Erucamide bei der Firma SigmaAldrich;
**Amid 2:** N,N'-Ethylenebis(stearamide), käuflich erhältlich unter der Bezeichnung N,N'-Ethylenebis(stearamide) bei der Firma SigmaAldrich;
**Amid 3:** lineares, hochmolekulares Silicon-Oxamid-Copolymer, hergestellt nach EP 1 963 404 B1, Beispiel 16;
**Silicon 1:** Ethyloxalamido-propylterminiertes Polydimethylsiloxan der Formel H₅C₂O-CO-CO-NH-C₃H₆-Si(CH₃)₂-[OSi(CH₃)₂]ₙ-OSi(CH₃)₂-C₃H₆-NH-CO-CO-OC₂H₅ mit einem zahlenmittleren Molekulargewicht Mn von 11457 g/mol;
**Silicon 2:** Ethyloxalamido-propylterminiertes Polydimethylsiloxan der Formel H₅C₂O-CO-CO-NH-C₃H₆-Si(CH₃)₂-[OSi(CH₃)₂]ₙ-OSi(CH₃)₂-C₃H₆-NH-CO-CO-OC₂H₅ mit einem zahlenmittleren Molekulargewicht Mn von 8103 g/mol.

### Beispiel 1

In einem 2 1 3-Hals-Kolben wurden unter Stickstoff-Atmosphäre 1,146 kg (0,1 mol) Silicon 1 vorgelegt und auf 80°C unter Rühren erwärmt. Anschließend wurden 37,1 g Amin 1 (0,2 mol) hinzugegeben, und nach 30 Minuten Rühren wurde durch Anlegen eines Drucks von 200 mbar das entstandene Ethanol abdestilliert. Nach weiteren 30 Minuten Rühren wurde das erhaltene Produkt als Polymerschmelze isoliert.

Man erhielt 1173 g eines Dodecylaminoxamido-propylterminierten Polydimethylsiloxans der Formel H₂₅C₁₂NH-CO-CO-NH-C₃H₆-Si(CH₃)₂-[OSi (CH₃)₂]ₙ-OSi(CH₃)₂-C₃H₆-NH-CO-CO-NHC₁₂H₂₅ mit einem zahlenmittleren Molekulargewicht von 11733 g/mol und einem Schmelzpunkt von 28°C **(Silicon 3).**

### Beispiel 2

In einem 2 1 3-Hals-Kolben wurden unter Stickstoff-Atmosphäre 1,146 kg (0,1 mol) Silicon 1 vorgelegt und auf 80°C unter Rühren erwärmt. Anschließend wurden 39,7 g Amin 2 (0,2 mol) hinzugegeben, und nach 30 Minuten Rühren wurde durch Anlegen eines Drucks von 200 mbar das entstandene Ethanol abdestilliert. Nach weiteren 30 Minuten Rühren wurde das erhaltene Produkt als Polymerschmelze isoliert.

Man erhielt 1173 g eines bei Raumtemperatur flüssigen cocoaminoxamido-propylterminierten Polydimethylsiloxans mit einem zahlenmittleren Molekulargewicht von 11752 g/mol **(Silicon 4).**

### Beispiel 3

In einem 2 1 3-Hals-Kolben wurden unter Stickstoff-Atmosphäre 1,146 kg (0,1 mol) Silicon 1 vorgelegt und auf 80°C unter Rühren erwärmt. Anschließend wurden 53,9 g Amin 3 (0,2 mol) hinzugegeben, und nach 30 Minuten Rühren wurde durch Anlegen eines Drucks von 200 mbar das entstandene Ethanol abdestilliert. Nach weiteren 30 Minuten Rühren würde das erhaltene Produkt als Polymerschmelze isoliert.

Man erhielt 1175 g eines Octadecylaminoxamido-propylterminierten Polydimethylsiloxans mit einem zahlenmittleren Molekulargewicht von 11932 g/mol **(Silicon 5).**

### Beispiel 4

In einem 2 1 3-Hals-Kolben wurden unter Stickstoff-Atmosphäre 0,810 kg (0,1 mol) Silicon 2 vorgelegt und auf 60°C unter Rühren erwärmt. Anschließend wurden 37,1 g Amin 1 (0,2 mol) hinzugegeben, und nach 30 Minuten Rühren wurde durch Anlegen eines Drucks von 200 mbar das entstandene Ethanol abdestilliert. Nach weiteren 30 Minuten Rühren wurde das erhaltene Produkt als Polymerschmelze isoliert.

Man erhielt 837 g eines Dodecylaminoxamido-propylterminierten Polydimethylsiloxans der Formel H₂₅C₁₂NH-CO-CO-NH-C₃H₆-Si(CH₃)₂-[OSi (CH₃)₂]ₙ-OSi(CH₃)₂-C₃H₆-NH-CO-CO-NHC₁₂H₂₅ mit einem zahlenmittleren Molekulargewicht von 8346 g/mol und einem Schmelzpunkt von 28°C **(Silicon 6).**

### Beispiel 5

In einem 2 1 3-Hals-Kolben wurden unter Stickstoff-Atmosphäre 0,810 kg (0,1 mol) Silicon 2 vorgelegt und auf 60°C unter Rühren erwärmt. Anschließend wurden 53,9 g Amin 2 (0,2 mol) hinzugegeben, und nach 30 Minuten Rühren wurde durch Anlegen eines Drucks von 200 mbar das entstandene Ethanol abdestilliert. Nach weiteren 30 Minuten Rühren wurde das erhaltene Produkt als Polymerschmelze isoliert.

Man erhielt 842 g eines cocoaminoxamido-propylterminierten Polydimethylsiloxans der Formel H₃₇C₁₈NH-CO-CO-NH-C₃H₆-Si(CH₃)₂-[OSi (CH₃)₂]ₙ-OSi(CH₃)₂-C₃H₆-NH-CO-CO-NHC₁₈H₃₇ mit einem zahlenmittleren Molekulargewicht von 8488 g/mol **(Silicon 7).**

### Beispiele 6 bis 10

Die oben hergestellten Silicone 3-7 wurden jeweils mit Polyethylen PE 1 in den in Tabelle 1 angegebenen Mengen bei Raumtemperatur homogen vermischt, wobei die Gesamtmenge der jeweiligen Mischung 1000 g betrug.

Anschließend wurde diese Mischung jeweils in einem gegenläufigen Zwei-Wellen Extruder der Fa. Collin bei einer Temperatur von 195°C compoundiert. Dabei betrug die Temperatur im Einzugsbereich (Zone 1) 95°C, wurde in Zone 2 und Zone 3 auf 190°C gesteigert und in Zone 4 und Zone 5 auf 195°C weiter gesteigert. Zone 6 (Düse) wurde auf 190°C temperiert. Die Mischung wurde als Strang extrudiert, der anschließend granuliert wurde. Die Umdrehungszahl der Schnecken betrug 50 U/min. Die Austragsgeschwindigkeit betrug etwa 1,5 kg/h.

An den so erhaltenen Polymermischungen wurden im Anschluss mittels eines MFI-Gerätes der Fa. Göttfert (MI II) die Schmelz-Volumen-Rate (MVR) bei einer Temperatur von 175°C und einem Belastungsgewicht von 2,16 kg und einer Temperierungszeit von 5 Minuten bei einem Düsendurchmesser von 2 mm nach DIN ISO 1133 bestimmt. Dabei wurden jeweils 3 Messwerte bestimmt und diese dann gemittelt.

Die Ergebnisse finden sich in Tabelle 1.

### Beispiel 11

10 g des oben hergestellten Silicons 3 wurden mit 990 g Polyethylen PE 1 in den in Tabelle 1 angegebenen Mengen bei Raumtemperatur homogen vermischt, wobei die Gesamtmenge der Mischung 1000 g betrug.

Anschließend wurde diese Mischung jeweils in einem gegenläufigen Zwei-Wellen Extruder der Fa. Collin bei einer Temperatur von 195°C compoundiert. Dabei betrug die Temperatur im Einzugsbereich (Zone 1) 95°C, wurde in Zone 2 und Zone 3 auf 190°C gesteigert und in Zone 4 und Zone 5 auf 195°C weiter gesteigert. Zone 6 (Düse) wurde auf 190°C temperiert. Die Mischung wurde als Strang extrudiert, der anschließend granuliert wurde. Die Umdrehungszahl der Schnecken betrug 50 U/min. Die Austragsgeschwindigkeit betrug etwa 1,5 kg/h.

An der so erhaltenen Polymermischung wurde im Anschluss mittels eines MFI-Gerätes der Fa. Göttfert (MI II) die Schmelz-Volumen-Rate (MVR) bei einer Temperatur von 175°C und einem Belastungsgewicht von 2,16 kg und einer Temperierungszeit von 5 Minuten bei einem Düsendurchmesser von 2 mm nach DIN ISO 1133 bestimmt. Dabei wurden 3 Messwerte bestimmt und diese dann gemittelt. Das Ergebnis findet sich in Tabelle 1.

**Tabelle 1:**

| **Beispiel** | PE1 [g] | Silicon 3 [g] | Silicon 4 [g] | Silicon 5 [g] | Silicon 6 [g] | Silicon 7 [g] | MVR [ml/10min] |
|---|---|---|---|---|---|---|---|
| **6** | 980 | 20 | - | - | - | - | 24,6 |
| **7** | 980 | - | 20 | - | - | - | 21,8 |
| **8** | 980 | - | - | 20 | - | - | 19,3 |
| **9** | 980 | - | - | - | 20 | | 22,5 |
| **10** | 980 | - | - | - | - | 20 | 18,5 |
| **11** | 990 | 10 | - | - | - | - | 19,2 |

### Vergleichsbeispiel V1

Die in Beispielen 6-10 beschriebene Arbeitsweise wird wiederholt mit der Abänderung, dass keines der Silicone 3-7 eingesetzt wurde. Die Ergebnisse finden sich in Tabelle 2.

### Vergleichsbeispiele V2 bis V4

Die in Beispielen 6-10 beschriebene Arbeitsweise wird wiederholt mit der Abänderung, dass anstelle der Silicone 3-7 jeweils 20 g der in Tabelle 2 angegebenen Amide eingesetzt wurden.

Die Ergebnisse finden sich in Tabelle 2.

**Tabelle 2:**

| **Beispiel** | PE1 [g] | Amid 1 [g] | Amid 2 [g] | Amid 3 [g] | MVR [ml/10min] |
|---|---|---|---|---|---|
| **V1** | 1000 | - | - | - | 16,3 |
| **V2** | 980 | 20 | - | - | 20, 4 |
| **V3** | 980 | - | 20 | - | 20,2 |
| **V4** | 980 | - | - | 20 | 15, 9 |

Man erkennt, dass die endständig funktionalisierten Silicone 3 bis 7 in den Mischungen der Ausführungsbeispiele 6-11 deutlich höhere Fließfähigkeiten zeigen verglichen mit hochmolekularen linearen Silicon-Oxamid-Copolymeren nach dem Stand der Technik. Auch gegenüber Standard-Prozesshilfsmitteln auf Amidbasis wie Eurucamid oder EBS (Ethylen-bis-stearamid) sind die erfindungsgemäßen Zusammensetzungen effektiver bzw. in etwa gleich effektiv. Diese zeigen jedoch aufgrund ihres niedermolekularen Charakters v.a. bei höheren Beladungen starke Tendenz zur Migration an die Oberfläche des Kunststoffes, was vielfach unerwünscht ist.

### Beispiele 12-17

Die oben hergestellten Silicone 3-7 wurden jeweils mit Polyethylen PE 2 in den in Tabelle 3 angegebenen Mengen bei Raumtemperatur homogen vermischt, wobei die Gesamtmenge der jeweiligen Mischung 1000 g betrug.

Anschließend wurde diese Mischung in einem gegenläufigen Zwei-Wellen Extruder der Fa. Collin bei einer Temperatur von 195°C compoundiert. Dabei betrug die Temperatur im Einzugsbereich (Zone 1) 95°C, wurde in Zone 2 und Zone 3 auf 190°C gesteigert und in Zone 4 und Zone 5 auf 195°C weiter gesteigert. Zone 6 (Düse) wurde auf 195°C temperiert. Die Mischung wurde als Strang extrudiert, der anschließend granuliert wurde. Die Umdrehungszahl der Schnecken betrug 50 U/min. Die Austragsgeschwindigkeit betrug etwa 1,5 kg/h.

An den so erhaltenen Polymermischungen wurden im Anschluss mittels eines MFI-Gerätes der Fa. Göttfert (MI II) die Schmelz-Volumen-Rate (MVR) bei einer Temperatur von 190 °C und einem Belastungsgewicht von 10 kg und einer Temperierungszeit von 5 Minuten bei einem Düsendurchmesser von 2 mm nach DIN ISO 1133 bestimmt. Dabei wurden jeweils 3 Messwerte bestimmt und diese dann gemittelt.

Die Ergebnisse finden sich in Tabelle 3.

### Vergleichsbeispiel V5

Die in Beispielen 12-17 beschriebene Arbeitsweise wird wiederholt mit der Abänderung, dass keines der Silicone 3-7 eingesetzt wurde. Das Ergebnis findet sich in Tabelle 3.

**Tabelle 3:**

| **Beispiel** | PE2 [g] | Silicon 3 [g] | Silicon 4 [g] | Silicon 5 [g] | Silicon 6 [g] | Silicon 7 [g] | MVR [ml/10min] |
|---|---|---|---|---|---|---|---|
| **V5** | 1000 | - | - | - | - | - | 5, 8 |
| **12** | 980 | 20 | - | - | - | - | 17, 9 |
| **13** | 980 | - | 20 | - | - | - | 16, 3 |
| **14** | 980 | - | - | 20 | - | - | 15, 2 |
| **15** | 980 | - | - | - | 20 | - | 16, 8 |
| **16** | 980 | - | - | - | - | 20 | 15,3 |
| **17** | 980 | 10 | - | - | - | - | 14,0 |

### Beispiele 18-23

Die oben hergestellten Silicone 3-7 wurden jeweils mit Polypropylen Hompolymer PP 1 in den in Tabelle 4 angegebenen Mengen bei Raumtemperatur homogen vermischt, wobei die Gesamtmenge der jeweiligen Mischung 1000 g betrug.

Anschließend wurde diese Mischung in einem gegenläufigen Zwei-Wellen Extruder der Fa. Collin bei einer Temperatur von 210°C compoundiert. Dabei betrug die Temperatur im Einzugsbereich (Zone 1) 95°C, wurde in Zone 2 und Zone 3 auf 190°C gesteigert und in Zone 4 und Zone 5 auf 205°C weiter gesteigert. Zone 6 (Düse) wurde auf 200°C temperiert. Die Mischung wurde als Strang extrudiert, der anschließend granuliert wurde. Die Umdrehungszahl der Schnecken betrug 50 U/min. Die Austragsgeschwindigkeit betrug etwa 1,5 kg/h.

An den so erhaltenen Polymermischungen wurden im Anschluss mittels eines MFI-Gerätes der Fa. Göttfert (MI II) die Schmelz-Volumen-Rate (MVR) bei einer Temperatur von 230 °C und einem Belastungsgewicht von 2,16 kg und einer Temperierungszeit von 5 Minuten bei einem Düsendurchmesser von 2 mm nach DIN ISO 1133 bestimmt. Dabei wurden jeweils 3 Messwerte bestimmt und diese dann gemittelt.

Die Ergebnisse finden sich in Tabelle 4.

### Vergleichsbeispiel V6

Die in Beispielen 18-23 beschriebene Arbeitsweise wird wiederholt mit der Abänderung, dass keines der Silicone 3-7 eingesetzt wurde. Das Ergebnis findet sich in Tabelle 4.

**Tabelle 4:**

| **Beispiel** | PP1 [g] | Silicon 3 [g] | Silicon 4 [g] | Silicon 5 [g] | Silicon 6 [g] | Silicon 7 [g] | MVR [ml/10min] |
|---|---|---|---|---|---|---|---|
| **V6** | 1000 | - | - | - | - | - | 5,9 |
| **18** | 980 | 20 | - | - | - | - | 11,8 |
| **19** | 980 | - | 20 | - | - | - | 11,2 |
| **20** | 980 | - | - | 20 | - | - | 10,3 |
| **21** | 980 | - | - | - | 20 | - | 10,0 |
| **22** | 980 | - | - | - | - | 20 | 9,5 |
| **23** | 980 | 10 | - | - | - | - | 8,8 |

## Patentansprüche

1. Zusammensetzungen enthaltend
(A) thermoplastische Polymere und
(B) mindestens eine Organosiliciumverbindung der allgemeinen Formel
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
wobei
**R** gleich oder verschieden sein kann und einen einwertigen, gegebenenfalls substituierten, SiC-gebundenen Kohlenwasserstoffrest bedeutet,
**R¹** gleich oder verschieden sein kann und Wasserstoffatom oder einen einwertigen, gegebenenfalls substituierten Kohlenwasserstoffrest bedeutet,
**R²** eine SiC-gebundene Einheit der allgemeinen Formel
R³-X-[CO-(CO)ₙ]-X-R⁴- (II)
bedeutet, worin
**X** gleich oder verschieden sein kann und -O- oder -NR^{x}- ist,
**R³** gleich oder verschieden sein kann und monovalente, gegebenenfalls substituierte Kohlenwasserstoffreste mit mindestens 6 Kohlenstoffatomen bedeutet,
**R⁴** bivalente, gegebenenfalls substituierte Kohlenwasserstoffreste mit 1 bis 40 Kohlenstoffatomen, wobei einzelne Kohlenstoffatome durch Sauerstoffatome oder -NR^{z}- ersetzt sein können, bedeutet,
**R^{x}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**R^{z}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**n** 0 oder 1 ist,
**a** 0, 1, 2 oder 3 ist,
**b** 0 oder 1 ist,
**p** eine ganze Zahl von 1 bis 1000 ist,
**q** 0 oder eine ganze Zahl von 1 bis 100 ist und
**r** 0 oder eine ganze Zahl von 1 bis 100,
mit der Maßgabe, dass a+b ≤ 3 ist und mindestens ein Rest R² vorhanden ist.

2. Zusammensetzungen gemäß Anspruch 1, **dadurch gekennzeichnet, dass** es sich bei Komponente (A) um Polyethylen, Polypropylen, Polyamid, Polyethylenterephthalat oder Polybutylenterephthalat handelt.

3. Zusammensetzungen gemäß Anspruch 1 oder 2, **dadurch gekennzeichnet, dass** Organosiliciumverbindungen der Formel (I) ein zahlenmittleres Molekulargewicht Mn von 1000 g/mol bis 35 000 g/mol haben.

4. Zusammensetzungen gemäß einem oder mehreren der Ansprüche 1 bis 3, **dadurch gekennzeichnet, dass** Komponente (B) in Mengen von 0,05 Gewichtsteilen bis 10 Gewichtsteilen, bezogen auf 100 Gewichtsteile Komponente (A), eingesetzt.

5. Zusammensetzungen gemäß einem oder mehreren der Ansprüche 1 bis 4, **dadurch gekennzeichnet, dass** sie zusätzlich zu den Komponenten (A) und (B) weitere Stoffe enthalten, ausgewählt aus anorganischen Füllstoffen (C), organischen oder anorganischen Fasern (D), Flammschutzmitteln (E), Bioziden (F), Pigmenten (G), UV-Absorbern (H) und HALS-Stabilisatoren (I).

6. Verfahren zur Herstellung der Zusammensetzungen gemäß einem oder mehreren der Ansprüche 1 bis 5 durch Vermischen der Komponenten (A) und (B) sowie gegebenenfalls weiteren Komponenten in beliebiger Reihenfolge.

7. Formkörper hergestellt durch Extrusion der Zusammensetzungen gemäß einem oder mehreren der Ansprüche 1 bis 5 oder hergestellt nach Anspruch 6 durch die Verarbeitung mittels Spritzgussprozess.

8. Organosiliciumverbindungen der allgemeinen Formel
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
wobei
**R** gleich oder verschieden sein kann und einen einwertigen, gegebenenfalls substituierten, SiC-gebundenen Kohlenwasserstoffrest bedeutet,
**R¹** gleich oder verschieden sein kann und Wasserstoffatom oder einen einwertigen, gegebenenfalls substituierten Kohlenwasserstoffrest bedeutet,
**R²** eine SiC-gebundene Einheit der allgemeinen Formel
R³-X-[CO-CO]-X-R⁴- (II)
bedeutet, worin
**X** gleich oder verschieden sein kann und -NR^{x}- ist,
**R³** gleich oder verschieden sein kann und monovalente, gegebenenfalls substituierte Kohlenwasserstoffreste mit mindestens 6 Kohlenstoffatomen bedeutet,
**R⁴** bivalente, gegebenenfalls substituierte Kohlenwasserstoffreste mit 1 bis 40 Kohlenstoffatomen, wobei einzelne Kohlenstoffatome durch Sauerstoffatome oder -NR^{z}- ersetzt sein können, bedeutet,
**R^{x}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**R^{z}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**a** 0, 1 oder 2 ist,
**b** 0 oder 1 ist,
**p** eine ganze Zahl von 1 bis 1000 ist,
**q** 0 oder eine ganze Zahl von 1 bis 100 ist und
**r** 0 oder eine ganze Zahl von 1 bis 100,
mit der Maßgabe, dass a+b ≤ 3 ist und mindestens ein Rest R² vorhanden ist.

9. Verfahren zur Herstellung von oxamidfunktionellen Siloxanen durch Umsetzung von Organosiliciumverbindungen der allgemeinen Formel
R_{3-a-b}(OR¹)ₐR¹¹_{b}Si[OSiR₂]ₚ[OSiRR¹¹]_{q}[OSiR¹¹₂]ᵣOSiR_{3-a-b}(OR¹)ₐR¹¹_{b} (I'),
wobei R, R¹, a, b, p, q und r die oben dafür angegebenen Bedeutungen haben und
R¹¹ eine SiC-gebundene Einheit der allgemeinen Formel
R¹⁰-O-[CO-CO]-NR^{x}-R⁴- (II')
bedeutet, worin
R⁴, R^{x} und n die oben dafür angegebenen Bedeutungen haben und R¹⁰ Wasserstoffatom oder einen einwertigen, gegebenenfalls substituierten Kohlenwasserstoffrest darstellt, der durch Heteroatome unterbrochen sein kann,
mit der Maßgabe, dass a+b ≤ 3 ist und mindestens ein Rest R¹¹ vorhanden ist,
mit organischen Verbindungen der allgemeinen Formel
R³-NR^{x}-H (IV),
worin R³ und R^{x} eine oben dafür angegebene Bedeutung haben.

10. Verfahren gemäß Anspruch 9, **dadurch gekennzeichnet, dass** es sich bei den Verbindungen der Formel (IV) um primäre Amine handelt.

## Claims

1. Compositions comprising
(A) thermoplastic polymers and
(B) at least one organosilicon compound of the general formula
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
where
**R** may be identical or different and is a monovalent, optionally substituted, SiC-bonded hydrocarbon radical,
**R¹** may be identical or different and is a hydrogen atom or a monovalent, optionally substituted hydrocarbon radical,
**R²** is a SiC-bonded unit of the general formula
R³-X-[CO-(CO)ₙ]-X-R⁴- (II)
where
**X** may be identical or different and is -O- or -NR^{x}-,
**R³** may be identical or different and are monovalent, optionally substituted hydrocarbon radicals having at least 6 carbon atoms,
**R⁴** are divalent, optionally substituted hydrocarbon radicals having 1 to 40 carbon atoms, wherein individual carbon atoms may be replaced by oxygen atoms or -NR_{z}-,
**R^{x}** may be identical or different and is a hydrogen atom or monovalent, optionally substituted hydrocarbon radicals having 1 to 20 carbon atoms, wherein individual carbon atoms may be replaced by oxygen atoms,
**R^{z}** may be identical or different and is a hydrogen atom or monovalent, optionally substituted hydrocarbon radicals having 1 to 20 carbon atoms, wherein individual carbon atoms may be replaced by oxygen atoms,
**n** is 0 or 1,
**a** is 0, 1, 2 or 3,
**b** is 0 or 1,
**p** is an integer from 1 to 1000,
**q** is 0 or an integer from 1 to 100 and
**r** is 0 or an integer from 1 to 100,
with the proviso that a+b is ≤ 3 and at least one R² radical is present.

2. Compositions according to Claim 1, **characterized in that** component (A) is polyethylene, polypropylene, polyamide, polyethylene terephthalate or polybutylene terephthalate.

3. Compositions according to Claim 1 or 2, **characterized in that** organosilicon compounds of the formula (I) have a number-average molecular weight Mn of 1000 g/mol to 35 000 g/mol.

4. Compositions according to one or more of Claims 1 to 3, **characterized in that** component (B) is used in amounts of 0.05 parts by weight to 10 parts by weight, based on 100 parts by weight of component (A).

5. Compositions according to one or more of Claims 1 to 4, **characterized in that** said compositions, in addition to components (A) and (B), comprise further substances selected from inorganic fillers (C), organic or inorganic fibers (D), flame retardants (E), biocides (F), pigments (G), UV absorbers (H) and HALS stabilizers (I).

6. Process for producing the compositions according to one or more of Claims 1 to 5 by mixing components (A) and (B) and optionally further components in any desired sequence.

7. Molding produced by extrusion of the compositions according to one or more of Claims 1 to 5 or produced according to Claim 6 by processing by means of an injection-molding process.

8. Organosilicon compounds of the general formula
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
where
**R** may be identical or different and is a monovalent, optionally substituted, SiC-bonded hydrocarbon radical,
**R¹** may be identical or different and is a hydrogen atom or a monovalent, optionally substituted hydrocarbon radical,
**R²** is a SiC-bonded unit of the general formula
R³-X-[CO-CO]-X-R⁴- (II)
where
**X** may be identical or different and is -NR^{x}-,
**R³** may be identical or different and are monovalent, optionally substituted hydrocarbon radicals having at least 6 carbon atoms,
**R⁴** are divalent, optionally substituted hydrocarbon radicals having 1 to 40 carbon atoms, wherein individual carbon atoms may be replaced by oxygen atoms or -NR^{z}-,
**R^{x}** may be identical or different and is a hydrogen atom or monovalent, optionally substituted hydrocarbon radicals having 1 to 20 carbon atoms, wherein individual carbon atoms may be replaced by oxygen atoms,
**R^{z}** may be identical or different and is a hydrogen atom or monovalent, optionally substituted hydrocarbon radicals having 1 to 20 carbon atoms, wherein individual carbon atoms may be replaced by oxygen atoms,
**a** is 0, 1 or 2,
**b** is 0 or 1,
**p** is an integer from 1 to 1000,
**q** is 0 or an integer from 1 to 100 and
**r** is 0 or an integer from 1 to 100,
with the proviso that a+b is ≤ 3 and at least one R² radical is present.

9. Process for producing oxamide-functional siloxanes by reacting organosilicon compounds of the general formula
R_{3-a-b}(OR¹)ₐR¹¹_{b}Si[OSiR₂]ₚ[OSiRR¹¹]_{q}[OSiR¹¹₂]ᵣOSiR_{3-a-b}(OR¹)ₐR¹¹_{b} (I'),
where R, R¹, a, b, p, q and r have the definitions specified above and
R¹¹ is a SiC-bonded unit of the general formula
R¹⁰-O-[CO-CO]-NR^{x}-R⁴- (II')
where
R⁴, R^{x} and n each have the definitions specified for them above and
R¹⁰ is a hydrogen atom or a monovalent, optionally substituted hydrocarbon radical, which may be interrupted by heteroatoms,
with the proviso that a+b is ≤ 3 and at least one R¹¹ radical is present,
with organic compounds of the general formula
R³-NR^{x}-H (IV),
where R³ and R^{x} have a definition specified for them above.

10. Process according to Claim 9, **characterized in that** the compounds of formula (IV) are primary amines.

## Revendications

1. Compositions contenant
(A) des polymères thermoplastiques et
(B) au moins un composé organosilicié de formule générale
R_{3-a-b}(OR¹)ₐR²_{b}Si[OSiR₂]ₚ[OSiRR²]_{q}[OSiR²₂]ᵣOSiR_{3-a-b} (OR¹)ₐR²_{b} (I),
**R** pouvant être le même ou différent et représentant un radical hydrocarboné lié à SiC, monovalent, éventuellement substitué,
**R¹** pouvant être le même ou différent et représentant un atome d'hydrogène ou un radical hydrocarboné monovalent, éventuellement substitué,
**R²** représentant une unité liée à SiC de formule générale
R³-X-[CO-(CO)ₙ]-X-R⁴- (II),
dans laquelle
**X** peut être le même ou différent et est -O- ou -NR^{x}-,
**R³** peut être le même ou différent et représente des radicaux hydrocarbonés monovalents, éventuellement substitués, ayant au moins 6 atomes de carbone,
**R⁴** représente des radicaux hydrocarbonés divalents, éventuellement substitués, ayant de 1 à 40 atomes de carbone, dans lesquels des atomes de carbone individuels peuvent être remplacés par des atomes d'oxygène ou -NR^{z}-,
R^{x} peut être le même ou différent et représente un atome d'hydrogène ou des radicaux hydrocarbonés monovalents, éventuellement substitués, ayant de 1 à 20 atomes de carbone, dans lesquels des atomes de carbone individuels peuvent être remplacés par des atomes d'oxygène,
**R^{z}** peut être le même ou différent et représente un atome d'hydrogène ou des radicaux hydrocarbonés monovalents, éventuellement substitués, ayant de 1 à 20 atomes de carbone, dans lesquels des atomes de carbone individuels peuvent être remplacés par des atomes d'oxygène,
**n** est 0 ou 1,
**a** est 0, 1, 2 ou 3,
**b** est 0 ou 1,
**p** est un nombre entier valant de 1 à 1 000,
**q** est 0 ou un nombre entier valant de 1 à 100 et
**r** est 0 ou un nombre entier valant de 1 à 100,
étant entendu que a+b est ≤ 3 et au moins un radical R² est présent.

2. Compositions selon la revendication 1, **caractérisés en ce que** pour ce qui est du composant (A) il s'agit de polyéthylène, polypropylène, polyamide, poly(éthylène téréphtalate) ou poly(butylène téréphtalate).

3. Compositions selon la revendication 1 ou 2, **caractérisés en ce que** les composés organosiliciés de formule (I) ont une masse moléculaire moyenne en nombre Mₙ de 1 000 g/mole à 35 000 g/mole.

4. Compositions selon une ou plusieurs des revendications 1 à 3, **caractérisées en ce que** le composant (B) est utilisés en des quantités de 0,05 partie en poids à 10 parties en poids, par rapport à 100 parties en poids de composant (A).

5. Compositions selon une ou plusieurs des revendications 1 à 4, **caractérisées en ce qu'**elles contiennent en plus des composants (A) et (B) d'autres substances, choisies parmi des charges inorganiques (C), des fibres organiques ou inorganiques (D), des agents ignifuges (E), des biocides (F), des pigments (G), des absorbeurs d'UV (H) et des stabilisants HALS (I).

6. Procédé pour la préparation des compositions selon une ou plusieurs des revendications 1 à 5 par mélange des composants (A) et (B) ainsi qu'éventuellement d'autres composants en un ordre quelconque.

7. Corps moulé, produit par extrusion des compositions selon une ou plusieurs des revendications 1 à 5 ou préparées selon la revendication 6, par le traitement par un processus de moulage par injection.

8. Composés organosiliciés de formule générale
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
R pouvant être le même ou différent et représentant un radical hydrocarboné lié à SiC, monovalent, éventuellement substitué,
**R¹** pouvant être le même ou différent et représentant un atome d'hydrogène ou un radical hydrocarboné monovalent, éventuellement substitué,
**R²** représentant une unité liée à SiC de formule générale
R³-X-[CO-CO]-X-R⁴- (II),
dans laquelle
**X** peut être le même ou différent et est -NR^{x}-,
**R³** peut être le même ou différent et représente des radicaux hydrocarbonés monovalents, éventuellement substitués, ayant au moins 6 atomes de carbone,
**R⁴** représente des radicaux hydrocarbonés divalents, éventuellement substitués, ayant de 1 à 40 atomes de carbone, dans lesquels des atomes de carbone individuels peuvent être remplacés par des atomes d'oxygène ou -NR^{z}-,
**R^{x}** peut être le même ou différent et représente un atome d'hydrogène ou des radicaux hydrocarbonés monovalents, éventuellement substitués, ayant de 1 à 20 atomes de carbone, dans lesquels des atomes de carbone individuels peuvent être remplacés par des atomes d'oxygène,
**R^{z}** peut être le même ou différent et représente un atome d'hydrogène ou des radicaux hydrocarbonés monovalents, éventuellement substitués, ayant de 1 à 20 atomes de carbone, dans lesquels des atomes de carbone individuels peuvent être remplacés par des atomes d'oxygène,
**a** est 0, 1 ou 2,
**b** est 0 ou 1,
**p** est un nombre entier valant de 1 à 1 000,
**q** est 0 ou un nombre entier valant de 1 à 100 et
**r** est 0 ou un nombre entier valant de 1 à 100,
étant entendu que a+b est ≤ 3 et au moins un radical R² est présent.

9. Procédé pour la préparation de siloxanes à fonction oxamide par mise en réaction de composés organosiliciés de formule générale
R_{3-a-b}(OR¹)ₐR¹¹_{b}Si[OSiR₂]ₚ[OSiRR¹¹]_{q}[OSiR¹¹₂]ᵣOSiR_{3-a-b}(OR¹)ₐR¹¹_{b} (I'),
dans laquelle R, R¹, a, b, p, q et r ont les significations indiquées plus haut pour ceux-ci et
R¹¹ est une unité liée à SiC de formule générale
R¹⁰-O-[CO-CO]-NR^{x}-R⁴- (II'),
où
R⁴, R^{x} et n ont les significations indiquées plus haut pour ceux-ci et
R¹⁰ représente un atome d'hydrogène ou un radical hydrocarboné monovalent, éventuellement substitué, qui peut être interrompu par des hétéroatomes,
étant entendu que a+b est ≤ 3 et au moins un radical R¹¹ est présent,
avec des composés organiques de formule générale
R³-NR^{x}-H (IV),
dans laquelle R³ et R^{x} ont la signification indiquée plus haut pour ceux-ci.

10. Procédé selon la revendication 9, **caractérisé en ce que** pour ce qui est des composés de formule (IV) il s'agit d'amines primaires.
